# EUROPEAN PATENT SPECIFICATION

(11) **EP 3 451 088 B1**
(45) Date of publication and mention of the grant of the patent: **15.06.2022**
(21) Application number: 18156740.5
(22) Date of filing: 14.02.2018
(51) Int. Cl.: G05B 19/042, G05B 19/418

(54) **SETTING DEVICE, FA SYSTEM, CONTROL PROGRAM, AND CONTROL METHOD OF SETTING DEVICE**
EINSTELLVORRICHTUNG, FA-SYSTEM, STEUERUNGSPROGRAMM UND STEUERUNGSVERFAHREN DER EINSTELLVORRICHTUNG
DISPOSITIF DE RÉGLAGE, SYSTÈME FA, PROGRAMME DE COMMANDE ET PROCÉDÉ DE COMMANDE D'UN DISPOSITIF DE RÉGLAGE

(30) Priority: 29.08.2017 JP 2017164652
(43) Date of publication of application: 06.03.2019
(73) Proprietor: OMRON CORPORATION, Kyoto-shi, Kyoto 600-8530 (JP)
(72) Inventor: KOGAWARA, Toru, KYOTO, 600-8530 (JP); TAMURA, Yoshihide, KYOTO, 600-8530 (JP)
(74) Representative: Ter Meer Steinmeister & Partner

(56) References cited:
- US-A1- 2006 036 992
- US-A1- 2010 050 097
- US-A1- 2014 337 551

## Description

### BACKGROUND

### Technical Field

The disclosure relates to a setting device that sets operation conditions for a factory automation (FA) system.

### Description of Related Art

Non-Patent Document 1 discloses software that supports setting of operation conditions for each device (more specifically, control system design) in an FA system, for example, by offering a graphical user interface (GUI) to a user.

Patent Document 1 discloses a system and a method for automatically synchronizing multiple I/O devices with homogeneous and/or heterogeneous timing and I/O channel types. A graphical program specifying configuration and operation of a plurality of timed circuits, e.g., input circuits and/or output circuits, comprised on one or more I/O devices, may be created in response to user input, and executed to perform an I/O operation using the devices, where executing the program includes invoking software to: analyze the timed circuits to determine timing and triggering information for operation of the circuits, configure the circuits in accordance with the timing and triggering information, and operate the configured circuits to perform the operation. The analyzing may include determining the timed circuits, and one or more of: number, types, sharing, sources, exporting, and routing, of timing signals for each circuit, and starting/stopping orders for the circuits. User input may be received specifying setting and querying properties of the circuits.

### Documents

[Non-Patent Document 1] Create Simple Model-MATLAB&Simulinlc, Mathworks, [Searched on August 3, 2017], URL <https://mathworks.com/help/simulink/gs/create-a-simple-model.html>
[Patent Document 1] US 2006/036992 A1

### SUMMARY

However, there is still room for improvement in a specific configuration for allowing a user to easily set data to be communicated between devices (more specifically, between a network master and a network slave) in an FA system. An object of an aspect of the invention is to allow a user to easily set data.

The above identified objects are solved by the features of the independent claims.

With the claimed factory automation it is possible to set a type of data (input and output data which will be described later) to be transmitted between the network slave and the network master based on the role of the network slave. That is, it is possible to automatically set the data by the data setting unit merely by allowing the user to perform only the operation of setting the role. Therefore, since it is not necessary to allow the user to manually set the data unlike the related art, it is possible to allow the user to more easily set the data than in the related art. Note that the input and output data can also include synchronization communication data which will be described below.

The setting device according to an aspect of the invention may further include: a purpose setting unit that sets a purpose of the FA system, and the role may represent a role of the network slave for the purpose, and the data setting unit may set the type of the data further based on the purpose.

With the aforementioned configuration, it is possible to set (change) the data in accordance with the purpose of the FA system. Therefore, convenience for the user is further improved.

In the setting device according to an aspect of the invention, the network slave includes a first device and a second device, the role represents a master-servant relationship between the first device and the second device, the master-servant relationship in a case in which the first device and the second device mutually synchronously operate is regarded as a synchronization relationship, the setting device further includes:
: a synchronization target type setting unit that sets a synchronization target type that represents a type of numerical value that is a target of synchronization between the first device and the second device in the synchronization relationship, and the data setting unit sets
a type of the data to be transmitted from the first device to the second device via the network master based on the synchronization relationship and the synchronization target type.

In the FA system, the plurality of network slaves (the first device and the second device) are made to operate in a synchronized manner in many cases. Therefore, the convenience of a user's operation may be improved even in a case in which a type of data for establishing synchronization between the first device and the second device (synchronization communication data) is set.

With the aforementioned configuration, it is possible to automatically set the type of the synchronization communication data by the data setting unit merely by allowing the user to perform only an operation of setting the synchronization relationship (an example of an inter-slave master-servant relationship which will be described later) and the synchronization target type. That is, since it is not necessary to allow the user to manually set the synchronization communication data, it is possible to allow the user to more easily set the synchronization communication data than in the related art. Therefore, convenience for the user is further improved. Note that the synchronization communication data may be set regardless of the purpose of the FA system.

The setting device according to an aspect of the invention may further include a display screen, and the slave role setting unit may cause the display screen to display a table for allowing the user to perform an operation of setting the synchronization relationship.

With the aforementioned configuration, it is possible to allow the user to more easily set the synchronization relationship.

The setting device according to an aspect of the invention may further include a display screen, and on the display screen, an object that represents the first device may be regarded as a first object, and an object that represents the second device may be regarded as a second object, and the slave role setting unit may set the synchronization relationship by being triggered by an event in which the user performs an operation of connecting the first object and the second object by a predetermined connection object on the display screen.

With the aforementioned configuration, it is possible to allow the user to more easily set the synchronization relationship. In addition, it is also possible to allow the user to visually recognize the synchronization relationship with the configuration.

In the setting device according to an aspect of the invention, the slave role setting unit may set the synchronization relationship between the first device that is a single inter-slave master and second devices that are a plurality of inter-slave slaves, the first device that is the inter-slave master in the synchronization relationship may be regarded as a synchronization master device, the second devices that are inter-slave slaves in the synchronization relationship may be regarded as synchronization slave devices, and the synchronization target type setting unit may set the synchronization target type between the single synchronization master device and the plurality of synchronization slave devices.

With the aforementioned configuration, it is possible to set both the synchronization relationship and the synchronization target type (that is, synchronization conditions) between the single first device (inter-slave master) and the plurality of second devices (inter-slave slaves). Therefore, it is possible to design a system in consideration of a wider variety of synchronization conditions.

In the setting device, the first device that is the inter-slave master in the synchronization relationship may be regarded as a synchronization master device, and the synchronization target type setting unit may select setting of the synchronization target type in accordance with a type of the synchronization master device as 14.07.2021 initial setting of the synchronization target type.

With the aforementioned configuration, it is possible to offer recommended setting of the synchronization target type in accordance with the type of the synchronization master device as initial setting. Therefore, since it is not necessary for the user to select a suitable synchronization target type in accordance with the type of the synchronization master device every time, convenience for the user is further improved.

.

The setting device according to each aspect of the invention may be realized by a computer, and in this case, a control program for a setting device that causes the computer to realize the setting device by causing the computer to operate as the respective parts (software elements) provided in the setting device and a computer-readable recording medium that records the control program therein are also within the scope of the invention.

According to yet another aspect of the invention, there is provided a control method of a setting device that sets operation conditions for an FA system.

Therewith, it is possible to allow the user to more easily set the data to be communicated between the network master and the network slave.

### BRIEF DESCRIPTION OF THE DRAWINGS

Some of the following embodiments, examples or aspects are not according to the invention but are present for illustration purposes only. Fig.
1 is a functional block diagram illustrating configurations of main parts in an information processing device according to a first embodiment.
FIG. 2 is a functional block diagram illustrating configurations of main parts in an FA system according to the first embodiment.
FIG. 3A is a diagram for explaining an example of setting of input and output data according to the first embodiment.
FIG. 3B is a table illustrating an example of setting of the input and output data in accordance with the application of the FA system 100.
FIG. 4 is a diagram for explaining an example of setting of synchronization communication data according to a second embodiment.
FIG. 5 is a diagram for explaining another example of setting of synchronization communication data according to the second embodiment.
FIG. 6 is a diagram for explaining an example of setting of synchronization communication data according to a third embodiment.
FIG. 7 is diagram for explaining another example of setting of synchronization communication data according to a third embodiment.
FIG. 8A is diagram for explaining an example of setting of synchronization communication data according to a fourth embodiment.
FIG. 8B is a table illustrating an example of recommended setting of the synchronization method in accordance with the type of the synchronization master device.
FIG. 9 is a diagram for explaining setting of communication data in response to a user's operation according to a reference embodiment.
FIG. 10 is a diagram for explaining setting of communication data in response to a user's operation according to the reference embodiment.
FIG. 11 is a diagram for explaining setting of communication data in response to a user's operation according to the reference embodiment.

### DESCRIPTION OF THE EMBODIMENTS

### [First embodiment]

Hereinafter, a first embodiment will be described. Note that the same reference numerals will be given to members in the following respective embodiments that have the same functions as those described in the first embodiment and that the description thereof will be omitted. In addition, description of matters similar to those of known technologies will be appropriately omitted.

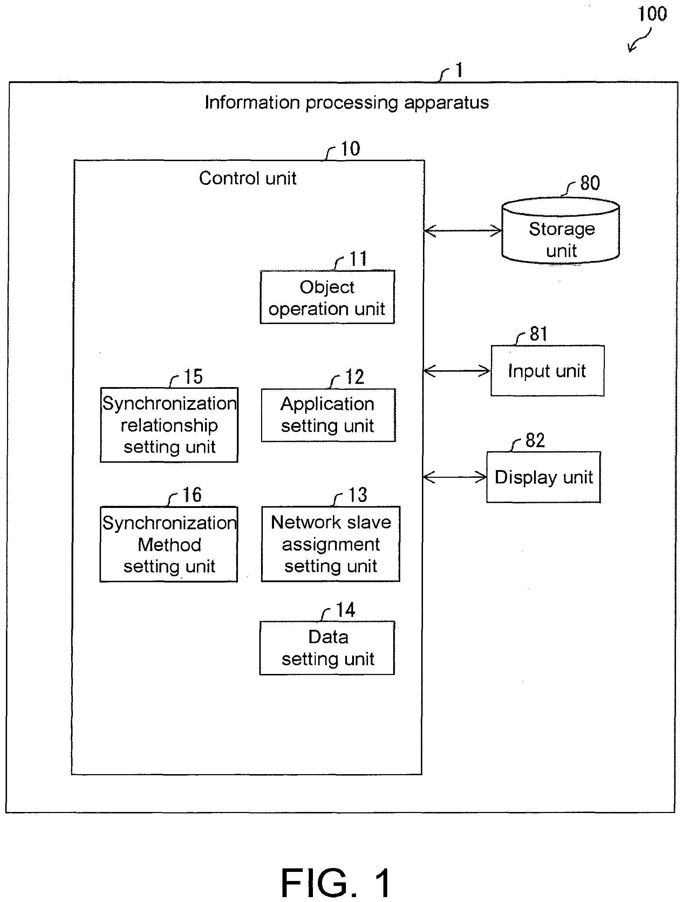

FIG. 1 is a functional block diagram illustrating configurations of main parts in an information processing device 1 (setting device) according to the first embodiment. The information processing device 1 may be a personal computer (PC), for example. The information processing device 1 includes a control unit 10, a storage unit 80, an input unit 81, and a display unit 82.

The control unit 10 comprehensively controls the respective parts in the information processing device 1. A program that offers a GUI to a user and allows the user to set operation conditions for the respective devices (hereinafter, a setting program) is stored in the storage unit 80. The control unit 10 includes an object operation unit 11, an application setting unit 12 (purpose setting unit), a network slave assignment setting unit 13 (slave role setting unit), a data setting unit 14, a synchronization relationship setting unit 15 (slave role setting unit) and a synchronization method setting unit 16 (synchronization target type setting unit). These functional units are realized by the control unit 10 executing the setting program read from the storage unit 80. Note that the synchronization relationship setting unit 15 and the synchronization method setting unit 16 will be described in a second embodiment.

The input unit 81 receives a user's input operations (hereinafter, user's operations). The input unit 81 is assumed to include a mouse in the first embodiment. Therefore, the user's operations are assumed to be operations performed mainly by using the mouse. However, another known input device may be used as the input unit 81. For example, a touch panel in which the input unit 81 and the display unit 82 are integrated may be used.

The display unit 82 displays various images in response to commands from the control unit 10. In particular, the display unit 82 causes objects representing various devices that are targets of setting of operation conditions to be displayed on a display screen (operation screen) of the setting program. Note that the display unit 82 may be provided as a display device separately from the information processing device 1.

The information processing device 1 functions as a setting device that sets operation conditions for an FA system 100 by allowing the user to perform operations on the display screen (in particular, the objects on the display screen) that is displayed on the display unit 82. Therefore, the information processing device 1 is also referred to as a programming terminal.

As will be described later, the FA system 100 includes a network master 3 and a network slave 4. In one example, the user can set (i) data to be output from the network master 3 to the network slave 4 and (ii) data to be output from the network slave 4 to the network master 3 on the display screen of the setting program. That is, the user can set the data to be input and output to and from the network slave 4 (input and output data) when viewed from the side of the network master 3.

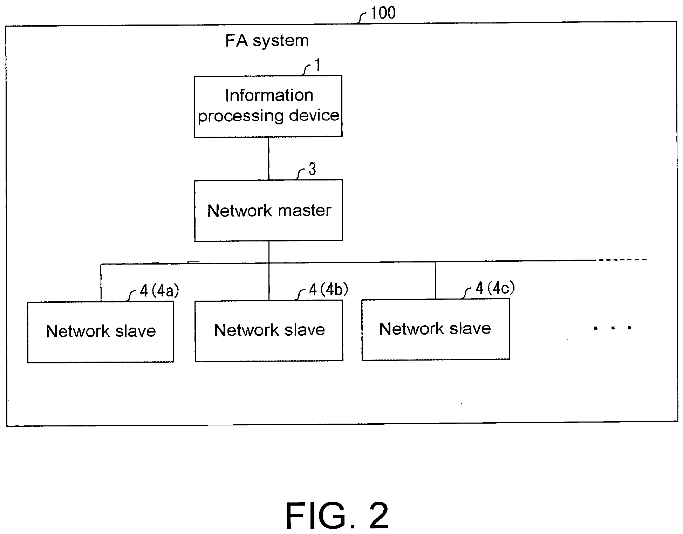

FIG. 2 is a functional block diagram illustrating configurations of main parts in the FA system 100. The FA system 100 includes the information processing device 1, the network master 3, and the network slave 4. The FA system 100 is a collective unit of each function of production equipment including a plurality of machines that are installed in a factory and is a system that realizes automation of factory manufacturing processes. The FA system 100 is realized by a master/slave control system.

The network master 3 controls one or more network slaves 4. The network master 3 may be realized by a programmable logic controller (PLC), for example. Operations of the network master 3 may be controlled by the information processing device 1. The network master 3 can output data to each of the network slaves 4. In addition, the network master 3 can acquire data from each of the network slaves 4.

Each of the network slaves 4 is connected to the information processing device 1 via the network master 3. The network slaves 4 execute one or a plurality of functions related to the manufacturing processes in response to commands from the network master 3. Hereinafter, the three network slaves 4 illustrated in FIG. 2 will also be referred to as network slaves 4a to 4c for convenience of description. The network slaves 4 mutually perform communication via the network master 3. Although a case in which a plurality of network slaves 4 are provided will be mainly exemplified herein, the number of the network slaves 4 may be one.

A master-servant relationship between the network slaves in relation to the plurality of network slaves will be referred to as an "inter-slave master-servant relationship" herein. The network slaves 4 may include a first device and a second device. The first device may be a master device between the network slaves (hereinafter referred to as an inter-slave master). In this case, the first device may be a device that has a master shaft. In addition, the second device may be a slave device between the network slaves (hereinafter referred to as an inter-slave slave or inter-slave servant). In this case, the second device may be a device that has a servant shaft that operates in synchronization with (example: following) the master shaft of the first device.

In addition, the inter-slave master-servant relationship includes a "synchronization relationship" that indicates a master-servant relationship in a case in which the first device and the second device operate in a mutually synchronized manner. The "synchronization master device" described herein represents a "master device in the synchronization relationship." In addition, the "synchronization slave device" represents a "slave device in the synchronization relationship."

Therefore, it should be noted that the "synchronization master device" and the "synchronization slave device" do not represent the "network master" and the "network slave," respectively. Both the synchronization master device and the synchronization slave device are network slaves.

The "synchronization method" described herein means a type of numerical value that is a target of synchronization (more specifically, a type of data that indicates the numerical value) between the first device and the second device in the synchronization relationship. Therefore, the synchronization method may also be referred to as a "synchronization target type."

A plurality of examples of setting of input and output data in the information processing device 1 will be described herein. In particular, a plurality of examples of setting of synchronization conditions will be described in the second embodiment and the like. Note that the "synchronization conditions" are terms that collectively represent the aforementioned synchronization relationship and the synchronization method. In the description of the second embodiment and the like, the first device is assumed to be the synchronization master device while the second device is assumed to be the synchronization slave device.

In the following example, the first device may be a device that includes a servo motor and a controller that controls the servo motor. For example, the servo motor of the first device is a drive device that drives a belt conveyor. The second device may be a robot (robot arm) that perform operations following operations of the belt conveyor (that is, the operations of the servo motor of the first device).

In a case in which the input and output data has been set on the display screen of the setting program, the information processing device 1 supplies information indicating the setting conditions for the input and output data (input and output data setting condition information) to the network master 3. In addition, the information processing device 1 supplies the input and output data setting condition information to each of the network slaves 4 via the network master 3. As a result, in the network master 3 and the network slaves 4, the setting conditions for the input and output data set by the user are reflected.

### (Setting example of input and output data)

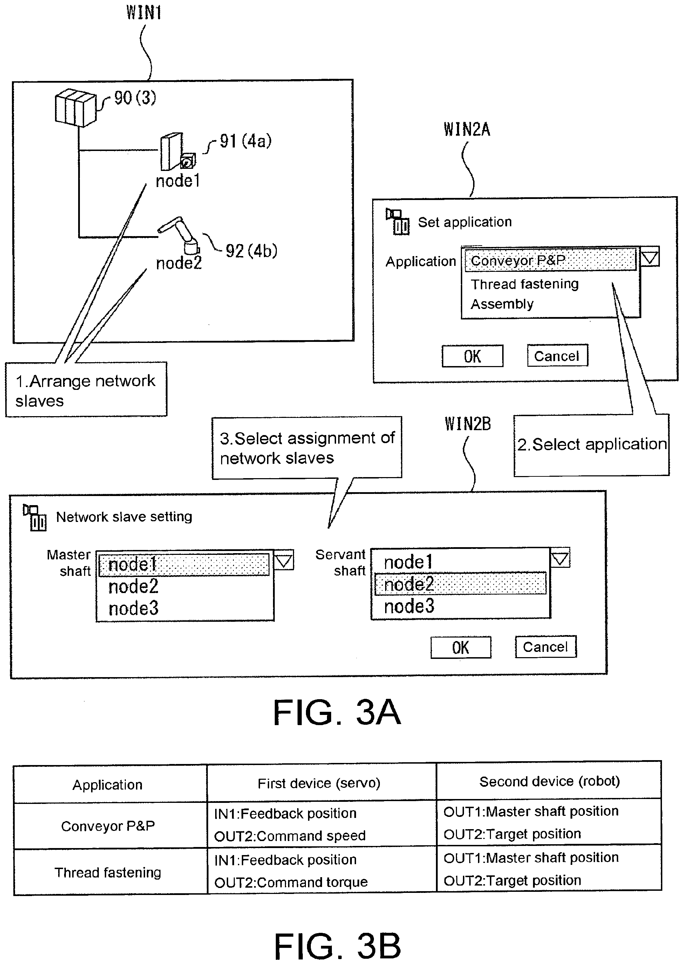

FIG. 3A is a diagram for explaining a setting example of the input and output data. The object operation unit 11 arranges various objects on the display screen in response to a user's operations. A window WIN1 is a region for arranging the various objects on the display screen.

The user selects objects indicating each device by a predetermined operation (example: clicking of the mouse). Then, the user arranges the objects in the window WIN1 by dragging and dropping the selected objects in the window WIN1. In the following example, it is assumed that the object (master object 90) indicating the network master 3 is arranged in advance in the window WIN1.

FIG. 3A illustrates a case in which an object indicating the network slave 4a (first object 91) and an object indicating the network slave 4b (second object 92) have been further arranged in the window WIN1 in response to the user's operations. Names (symbols) of "node 1" and "node 2" have been applied to the first object 91 and the second object 92, respectively.

After the arrangement of the first object 91 and the second object 92 is completed, the application setting unit 12 sets an application (purpose) of the FA system 100 in response to the user's operation. It should be noted that the term "application" described herein refers to the "purpose" rather than "software." The processing of the application setting unit 12 may also be referred to as a purpose setting process.

In one example, the application setting unit 12 causes a window WIN2A that is different from the window WIN1 to pop up in response to the user's operation. The window WIN2A is a region for allowing the user to set (select) an application. A window WIN2A offers "conveyor pick and place (P&P)", "thread fastening", and "assembly" as options of applications. In FIG. 3A, "conveyor P&P" has been selected as the application.

The network slave assignment setting unit 13 sets roles (functions) of the network slaves 4 based on the user's operations. For example, the network slave assignment setting unit 13 sets the respective roles (functions) of the first device and the second device. The processing of the network slave assignment setting unit 13 may also be referred to as a slave assignment setting process.

In one example, the roles may represent at least either of (i) roles of the network slaves 4 in the application (example: the respective roles of the first device and the second device) and (ii) the master-servant relationship between the first device and the second device (the inter-slave master-servant relationship).

In the first embodiment, the network slave assignment setting unit 13 sets the inter-slave master-servant relationship (one example of the respective roles of the first device and the second device) based on the user's operation. In one example, the network slave assignment setting unit 13 causes WIN2B to pop up by being triggered by an event in which the setting of the application has been completed in the application setting unit 12. The window WIN2B is a region for allowing the user to set (select) the inter-slave master-servant relationship.

The user selects a desired node number from the item "master shaft" in the window WIN2B. In this manner, the user can set which of the network slaves is to be set as the inter-slave master from among the network slaves 4a and 4b displayed in the window WIN1.

Similarly, the user selects a desired node number from the item "servant shaft" in the window WIN2B. In this manner, the user can select which of the network slaves is to be set as the inter-slave slave from among the network slaves 4a and 4b displayed in the window WIN1.

In FIG. 3A, the node 1 is selected as the master shaft, and the node 2 is selected as the servant shaft. That is, the role of the network slave 4a (first device) is set as the inter-slave master, and the role of the network slave 4b (second device) is set as the inter-slave slave, by the user.

The data setting unit 14 sets data to be communicated between the network master 3 and the network slaves 4. Specifically, the data setting unit 14 sets a type (format) of the data. Note that the processing of the data setting unit 14 may also be referred to as a data setting process.

In the first embodiment, the data setting unit 14 sets the aforementioned input and output data (that is, the data to be output from the network master 3 to the network slaves 4 and the data to be output from the network slaves 4 to the network master 3) in accordance with the role set by the network slave assignment setting unit 13.

That is, the data setting unit 14 collectively sets various kinds of data (input and output data) to be communicated between the network master 3 and the network slaves 4 in accordance with the role. The input and output data may or may not include synchronization communication data, which will be described later.

In addition, the network slave assignment setting unit 13 may further set respective roles of the first device and the second device in the application of the FA system 100. For example, the network slave assignment setting unit 13 may set the role of the first device as a "conveyor" and set the role of the second device as a "P&P robot" for the application "conveyor P&P". In this case, the data setting unit 14 may set the input data and output data in accordance with (i) the respective roles of the first device and the second device and further (ii) the application of the FA system 100.

FIG. 3B is a table illustrating an example of setting of the input and output data in accordance with the application of the FA system 100. The data setting unit 14 may set the input and output data in accordance with the application with reference to the table stored in advance in the storage unit 80. The table may be set in advance by a manufacturer of the information processing device 1 or may be able to be reset by the user. In the example of FIG. 3B, the first device is assumed to be a servo while the second device is assumed to be a robot.

In the item "first device (servo) in FIG. 3B, IN1 represents communication data for synchronization control that is to be input from the first device to the network master 3. In addition, OUT2 represents data to be output from the network master 3 to the synchronization master device. OUT2 is communication data specific to the application (communication data that is not used for the synchronization control, communication data for control in accordance with the application).

In addition, in the item "second device (robot), OUT1 represents communication data for synchronization control that is to be output from the network master 3 to the synchronization slave device. In addition, OUT2 of the same item represents communication data specific to the application from among data items to be output from the network master 3 to the synchronization slave device.

A case in which the application is "conveyor P&P" will be considered as an example. In this case, IN1 has been set to "feedback position" and OUT2 has been set to "command speed" in the first device. In addition, OUT1 has been set to "master shaft position" and OUT2 has been set to "target position" in the second device.

A case in which the application is "thread fastening" will be considered as another example. In this case, OUT1 and OUT2 in the second device and IN1 in the first device have been set in a manner similar to those in the aforementioned case of "conveyor P&P". Meanwhile, OUT2 in the first device has been set to "command torque" unlike the aforementioned case of "conveyor P&P".

As described above, the data setting unit 14 can collectively set (i) the communication data for the synchronization control and (ii) the communication data specific to the application for each of the first device and the second device in accordance with the application. In this manner, the data setting unit 14 can also set the input and output data in accordance with the application.

### (Advantages)

According to a setting device in the related art (for example, the information processing device that executes software as disclosed in Non-Patent Document 1), it is necessary for a user (example: a designer of the FA system) to perform many operations for setting various kinds of data to be communicated between the network master 3 and the network slaves.

Specifically, it is necessary for the user to manually (individually) set (i) which data is to be output from the network master to the network slaves and (ii) which data is to be output from the network slave to the network master in accordance with operation conditions for the FA system. Therefore, it is necessary for the user to manually perform the setting on each of the network slaves in accordance with the operation conditions for the FA system that the user intends (see the reference embodiment described later).

By the way, according to the software disclosed in Non-Patent Document 1, it is possible to connect the first object and the second object by the arrow directed from the first object to the second object. In a case in which the connection represented by the arrow has been established, output data of the first object is automatically set as input data of the second object. That is, a data input and output relationship between the first object and the second object is automatically set.

However, content (example: a type of data) of various kinds of data (input and output data) to be communicated between the network master and the network slaves is not set in accordance with specific operation conditions (example: roles of the network slaves) for the FA system according to the software disclosed in Non-Patent Document 1. In this manner, the software disclosed in Non-Patent Document 1 has not yet been able to allow the user to simply set the input and output data.

Meanwhile, according to the information processing device 1, the data setting unit 14 can set the type of the data (input and output data) to be transmitted between the network slaves and the network master based on the roles of the network slaves 4 set by the network slave assignment setting unit 13.

For example, the data setting unit 14 can set the type of the data to be transmitted from the first device to the second device via the network master 3 based on the respective roles of the first device and the second device set by the network slave assignment setting unit 13. That is, the data setting unit 14 can automatically set the input and output data merely by allowing the user to perform only the operation of setting the roles. Therefore, since it is not necessary to allow the user to manually set the input and output data, it is possible to allow the user to more easily set the input and output data than in the related art.

In addition, in a case in which the roles represent the roles of the network slaves 4 in the application of the FA system 100, the data setting unit 14 can set the type of the input and output data further based on the application. In this manner, it is possible to set (change) the input and output data in accordance with the application of the FA system 100. Therefore, the convenience for the user is further improved.

Note that the input and output data according to the first embodiment may not necessarily include the communication data for synchronization control. The first device and the second device according to the first embodiment may be any devices as long as the first device and the second device can perform communication via the network master 3, and may not necessarily be in the synchronization relationship. In the first embodiment, the synchronization relationship setting unit 15 and the synchronization method setting unit 16 may be excluded from the information processing device 1.

Meanwhile, the input and output data according to the first embodiment may include synchronization communication data which will be described in the second embodiment. This is because "setting of the synchronization relationship" is a special example (an example of setting of an inter-slave master-servant relationship) of "setting of the respective roles of the first device and the second device".

Note that the setting device according to an aspect of the invention is not limited to the PC. The setting device may be a mobile terminal such as a tablet or a smartphone. In a case in which a mobile terminal is used as the setting device, it is possible for the user who is patrolling the FA system 100 to set the input and output data on site (example: just in front of production equipment in the factory).

Alternatively, a teaching pendant (teaching device) that controls each of the network slaves 4 in the FA system 100 can be used as the setting device. Similarly, an industrial PC platform (IPC) may be used as the setting device.

Note that the roles of the network slaves 4 may not necessarily represent the inter-slave master-servant relationship. This is because the number of the network slaves 4 may be one. In this case, a role may be set for the one network slave 4. The role may be set in relation to the application of the FA system 100 or may be set regardless of the application.

### [Second embodiment]

Furthermore, the plurality of network slaves 4 (the first device and the second device) are respectively operated in the synchronized manner in many cases in the FA system 100. Therefore, the convenience for user's operation may be improved even in a case in which data for establishing synchronization between the first device and the second device (synchronization communication data) is set.

Thus, a configuration for allowing the user to more easily set the synchronization conditions between the first device and the second device will be described in the second embodiment. Specifically, an example of operations of the synchronization relationship setting unit 15 and the synchronization method setting unit 16 will be described.

In the second embodiment, the synchronization relationship setting unit 15 and the network slave assignment setting unit 13 will be represented as individual functional units for convenience of description. However, the network slave assignment setting unit 13 may be made to have the functions of the synchronization relationship setting unit 15. That is, the network slave assignment setting unit 13 and the synchronization relationship setting unit 15 may be realized as an integral functional unit. This is because "setting of the synchronization relationship" is a special example of "setting of the respective roles of the first device and the second device" as described above. In the second embodiment, a case in which the roles represent the synchronization relationship (an example of the inter-slave master-servant relationship) will be exemplified.

In a case in which the user has set the synchronization conditions of the first device and the second device on the display screen of the setting program, the information processing device 1 supplies information indicating the synchronization conditions (synchronization condition information) to the first device and the second device via the network master 3. As a result, the synchronization conditions as set by the user is reflected in the first device and the second device.

### (First example of setting of synchronization communication data)

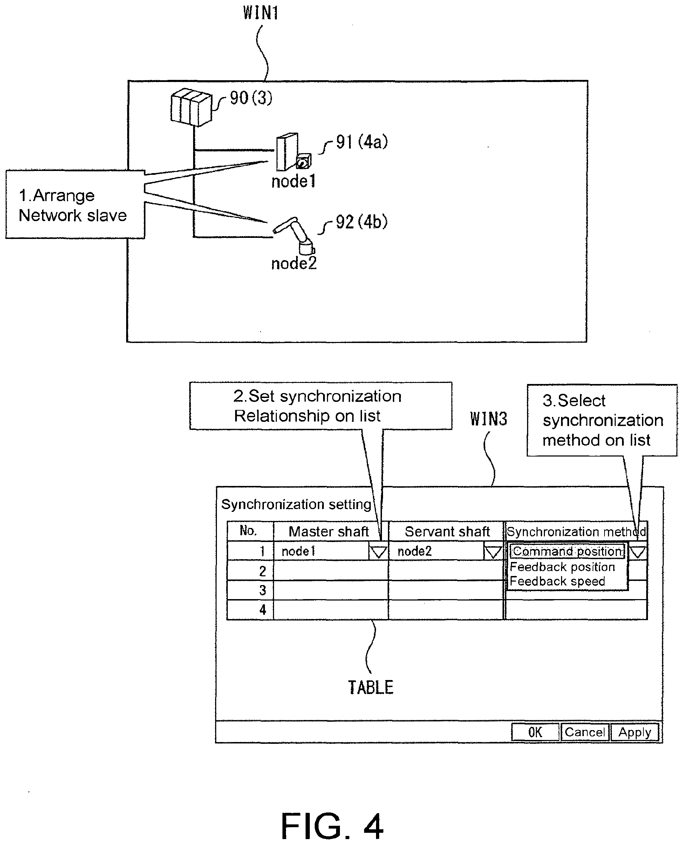

FIG. 4 is a diagram for explaining a first example of setting of synchronization communication data. After the arrangement of the first object 91 and the second object 92 is completed, the synchronization relationship setting unit 15 sets the synchronization relationship between the first device and the second device in response to a user's operation.

In the first example, the synchronization relationship setting unit 15 causes the display screen to display a setting table TABLE for allowing the user to set the synchronization relationship. In one example, the synchronization relationship setting unit 15 causes a window WIN3 that is different from the window WIN1 to pop up in response to a user's operation. Then, the synchronization relationship setting unit 15 causes the setting table TABLE to be displayed in the window WIN3.

The user can select which of the devices is to be set as the synchronization master device from among the devices arranged as the network slaves in the window WIN1 by pressing a pull-down button of the item "master shaft" in the setting table TABLE. Similarly, the user can select which of the devices is to be set as the synchronization slave device by pressing a pull-down button of the item "servant shaft" in the setting table TABLE. In FIG. 4, nodel and node 2 have been selected as the master shaft (synchronization master device) and the servant shaft (synchronization slave device), respectively.

After the setting of the synchronization relationship between the first device and the second device is completed, the synchronization method setting unit 16 sets a synchronization method between the first device and the second device in response to a user's operation. Specifically, the synchronization method setting unit 16 sets which of types of numerical values (example: physical amounts) is to be a target of synchronization from among "command position" (a command position of the master shaft), "feedback position" (a current position of the master shaft), and "feedback speed" (a current speed of the master shaft).

In the first example, the synchronization method setting unit 16 may allow the user to select the synchronization method by allowing the user to press a pull-down button of the item "synchronization method" in the setting table TABLE. In the example of FIG. 4, "command position" has been selected as the synchronization method. That is, the synchronization method between the first device and the second device has been set so as to synchronize the command position of the servant shaft with the command position of the master shaft.

In the second embodiment, the data setting unit 14 sets the data to be output from the first device to the second device via the network master 3 in accordance with (i) the synchronization relationship set by the synchronization relationship setting unit 15 and (ii) the synchronization method set by the synchronization method setting unit 16.

Specifically, the data setting unit 14 sets the data (synchronization communication data) to be communicated between the first device and the second device via the network master 3 for establishing synchronization between the first device and the second device. For example, the data setting unit 14 sets the synchronization communication data to be output from the first device to the second device via the network master 3.

As an example, a case in which the synchronization relationship and the synchronization method have been set as described above will be considered; that is,
- Synchronization master device: first device
- Synchronization slave device: second device
- Synchronization method: command position

In this case, the data setting unit 14 updates the setting of the first device on the setting program such that the first device is made to output (transmit) information indicating the command position of the first device (command position information) as synchronization communication data to the network master 3. As a result, the network master 3 can acquire (receive) the command position information from the first device.

In addition, the data setting unit 14 updates the setting of the second device on the setting program such that the second device is made to acquire the command position information as the synchronization communication data from the network master 3. As a result, the second device can acquire the command position information from the first device via the network master 3. In this manner, the data setting unit 14 according to the second embodiment plays a role in automatically setting the synchronization communication data on the setting program.

### (Second example of setting of synchronization communication data)

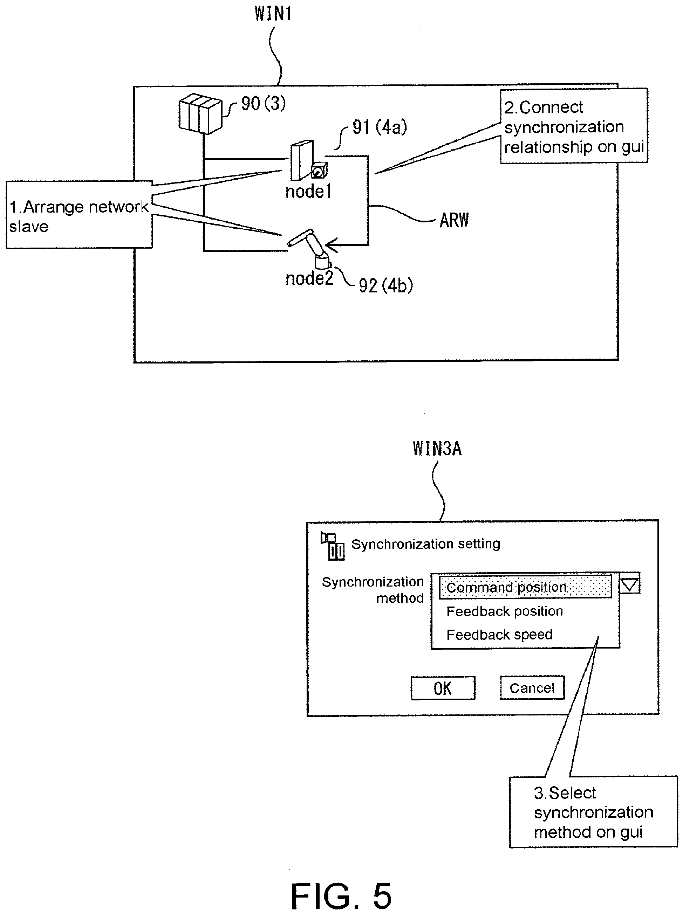

FIG. 5 is a diagram for explaining a second example of setting of the synchronization communication data. In the second example, the information processing device 1 allows the user to set the synchronization relationship by a method different from that in the first example.

The object operation unit 11 receives a predetermined user's operation (example: a predetermined command input) and connects the first object 91 and the second object 92 by a synchronization connection object ARW (predetermined connection object) in the window WIN1. The synchronization connection object ARW is an object indicating the synchronization relationship between the first device and the second device.

The synchronization connection object ARW in the example of FIG. 5 is an arrow directed from the first object 91 to the second object 92. The orientation of the arrow of the synchronization connection object ARW is intended such that (i) the device (first device) corresponding to the first object 91 located at the start point of the arrow is set as the synchronization master device and (ii) the device (second device) corresponding to the second object 92 located at the end point of the arrow is set as the synchronization slave device.

However, it should be noted that the synchronization communication data is not transmitted directly from the first device to the second device. As described above, the synchronization communication data is transmitted indirectly from the first device to the second device via the network master 3.

The synchronization relationship setting unit 15 sets the synchronization relationship between the first device and the second device by being triggered by an event in which the user has performed an operation of connecting the first object 91 and the second object 92 by the synchronization connection object ARW on the display screen. For example, a case in which the synchronization connection object ARW illustrated in FIG. 5 has been set by a user's operation will be considered. In this case, the synchronization relationship setting unit 15 sets the first device as the synchronization master device and sets the second device as the synchronization slave device based on the orientation of the arrow of the synchronization connection object ARW.

In the second example, the synchronization method setting unit 16 causes a window WIN3A to pop up by being triggered by an event in which the synchronization relationship setting unit 15 has completed the setting of the synchronization relationship between the first device and the second device. The window WIN3A is a region (example: dialog box) for allowing the user to set the synchronization method between the first device and the second device.

In the window WIN3A, "command position", "feedback position", and "feedback speed" are displayed as character strings that indicate options of the synchronization method. The user can select a desired synchronization method by clicking any one of these three character strings in the window WIN3A. Thereafter, the synchronization communication data is automatically set by the data setting unit 14 in a manner similar to that in the first example.

### (Advantages)

According to the setting device in the related art, it is necessary for the user to manually set the synchronization communication data. That is, it is necessary for the user to manually set (i) what type of the synchronization communication data is to be output from the first device to the network master 3 and (ii) what type of the synchronization communication data is to be output from the network master 3 to the second device in accordance with the synchronization conditions (the synchronization relationship and the synchronization method) that the user themselves intends.

Meanwhile, the data setting unit 14 according to the second embodiment can set the type of the data to be transmitted from the first device to the second device via the network master 3 in accordance with (i) the synchronization relationship set by the synchronization relationship setting unit 15 and (ii) the synchronization method set by the synchronization method setting unit 16. That is, it is possible to automatically set the synchronization communication data by the data setting unit 14.

That is, since it is not necessary to allow the user to manually set the synchronization communication data, it is possible to allow the user to more easily set the synchronization conditions between the first device and the second device than in the related art. Note that the synchronization communication data may be set by the data setting unit 14 regardless of the application of the FA system 100. In the second embodiment, the application setting unit 12 can also be excluded from the information processing device 1. Note that the application setting unit 12 may be excluded from the information processing device 1 in the first embodiment. This is because the input and output data may be set regardless of the application of the FA system 100 even in the first embodiment.

Further, in the information processing device 1, the synchronization relationship setting unit 15 provides the setting table TABLE (the case of the first example) or the synchronization connection object ARW (the case of the second example) to the user. Therefore, it is also possible to allow the user to more easily set the synchronization relationship. Note that it is possible to allow the user to visually recognize the synchronization relationship by the synchronization connection object ARW in the second example. In addition, it is also possible to allow the user to more easily set the synchronization method by the synchronization method setting unit 16.

In addition, the second device may be any device as long as the second device can be synchronized with the first device and is not limited to the synchronization slave device. The second device may be a synchronization master device that is different from the first device and is capable of operating in synchronization with the first device.

Note that in the case in which the second device is the synchronization master device, the first device may be synchronized with the second device. In this case, the first device may be a synchronization slave device or may be a synchronization master device that is different from the second device. The data setting unit 14 may set the synchronization communication data to be output from the second device to the first device.

### [Third embodiment]

Hereinafter, yet another example of setting of the synchronization conditions in the information processing device 1 will be described. In the third embodiment, a case in which two (a plurality of) synchronization slave devices (second devices) are associated with a single synchronization master device (first device) will be exemplified. In the following description, objects that respectively represent the two synchronization slave devices will be represented as second objects 92 and 93. In addition, it is assumed that a name "node 3" has been applied to the second object 93. It is assumed that the second object 93 is an object that represents the network slave 4c.

### (Third example of setting of synchronization communication data)

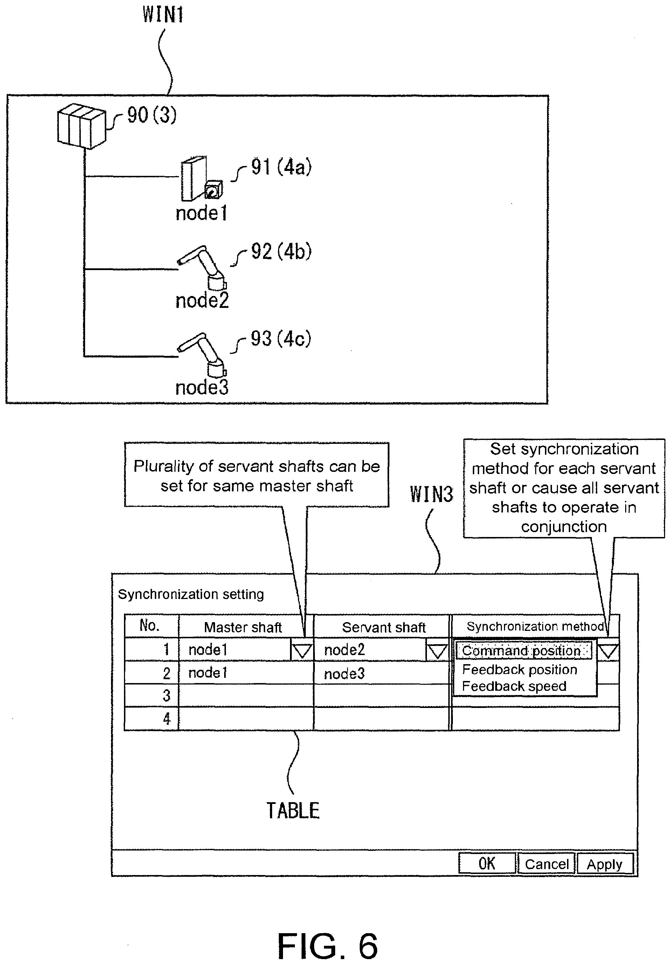

FIG. 6 is a diagram for explaining a third example of setting of the synchronization communication data. In the third embodiment, the synchronization relationship setting unit 15 sets a synchronization relationship between a single first device and a plurality of second devices. In addition, the synchronization method setting unit 16 sets a synchronization method between the single first device and the plurality of second devices.

In the third example, the synchronization method setting unit 16 causes the setting table TABLE to be displayed in the window WIN3 in a manner similar to that in the first example. In FIG. 6, nodel and node 2 have been selected as a main shaft and a servant shaft, respectively, in the row "No. 1" in the setting table TABLE. In addition, nodel and node3 have been selected as the master shaft and the servant shaft, respectively, in the row "No. 2". That is, the synchronization relationship setting unit 15 sets the two second devices corresponding to nodes 2 and 3 as synchronization slave devices with respect to the single first device (synchronization master device) corresponding to nodel.

The synchronization method setting unit 16 may allow the user to select the synchronization method by allowing the user to press the pull-down button of the item "synchronization method" in the setting table TABLE in a manner similar to that in the second embodiment.

In one example, the synchronization method setting unit 16 may allow the user to individually set synchronization methods for each of the row "No. 1" and the row "No. 2". That is, the synchronization method setting unit 16 may individually set synchronization methods with the first device for each of the plurality of second devices.

In a case in which the plurality of second device are made to perform respectively different operations (example: in a case in which the plurality of second devices are respectively different types of devices), the synchronization methods may be individually set in this manner.

Alternatively, the synchronization method setting unit 16 may allow the user to collectively set a synchronization method for both the rows "No. 1" and "No. 2". That is, the synchronization method setting unit 16 may collectively select a synchronization method with the first device for all the plurality of second devices that have the synchronization relationship with the first device. For example, the synchronization method setting unit 16 may automatically apply the synchronization method that the user has selected in the row "No. 1" to the row "No. 2".

In a case in which the plurality of second devices are made to respectively perform the same or similar operations (example: in a case in which the respective two second devices are the same types of devices), the synchronization method may be collectively set in this manner. It is possible to significantly reduce the number of processes for allowing the user to set the synchronization method by collectively setting the synchronization method in this manner.

### (Fourth example of setting of synchronization communication data)

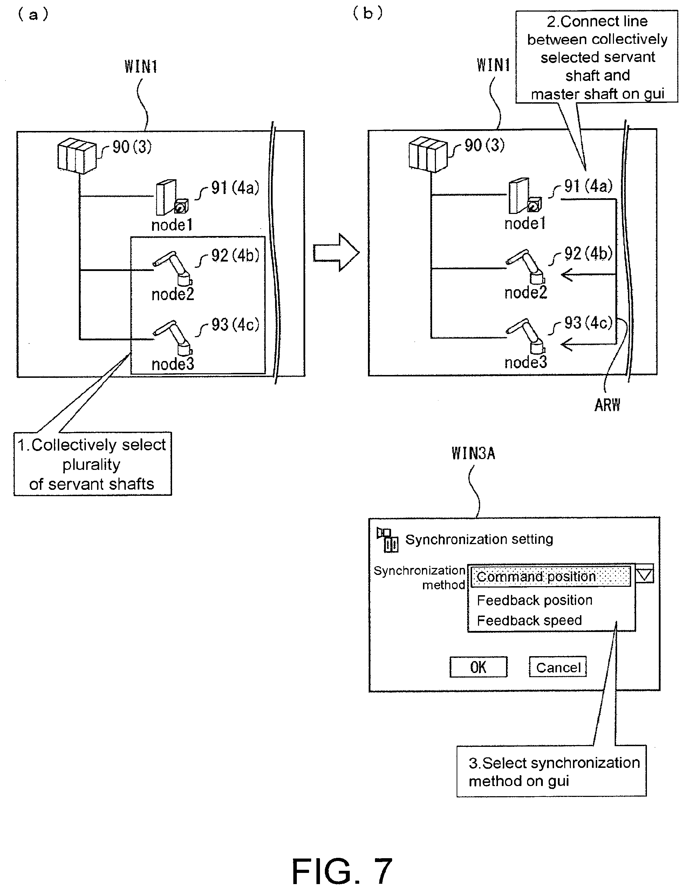

FIG. 7 is a diagram for explaining a fourth example of setting of the synchronization communication data. As illustrated in part (a) of FIG. 7, the user can collectively select the objects (example: the second objects 92 and 93) by performing a drag-and-drop operation in the window WIN1 to cause a selection region (example: a rectangular region) to include the plurality of objects (example: the second objects 92 and 93).

As illustrated in part (b) of FIG. 7, the user can set the synchronization connection object ARW by performing a predetermined operation (example: predetermined command input) in a state in which the second objects 92 and 93 have been selected.

In part (b) of FIG. 7, the synchronization connection object ARW includes arrows that are directed from the first object 91 to the respective second objects 92 and 93. The synchronization relationship setting unit 15 sets the first device as the synchronization master device and sets the two second devices as synchronization slave devices based on the orientation of the arrow of the synchronization connection object ARW.

In the fourth example, the synchronization method setting unit 16 causes the window WIN3A to pop up in a manner similar to that in the second example. The synchronization method setting unit 16 may individually or collectively select the synchronization method of the plurality of second devices in a manner similar to that in the third example.

In the third embodiment, it is possible to set both the synchronization relationship and the synchronization method (that is, the synchronization conditions) between the single first device and the plurality of second devices as described above. Therefore, since it is possible to design the system in consideration of further various synchronization conditions, the convenience for the user is further improved.

### [Fourth embodiment]

Hereinafter, a yet another example of setting of the synchronization condition in the information processing device 1 will be described. In a fourth embodiment, a case in which a single synchronization slave device (second device) is associated with a single synchronization master device (first device) in a manner similar to that in the second embodiment will be exemplified. However, a plurality of synchronization slave devices may be associated with the single synchronization master device in a similar manner to that in the third embodiment even in the fourth embodiment.

### (Fifth example of setting of synchronization communication data)

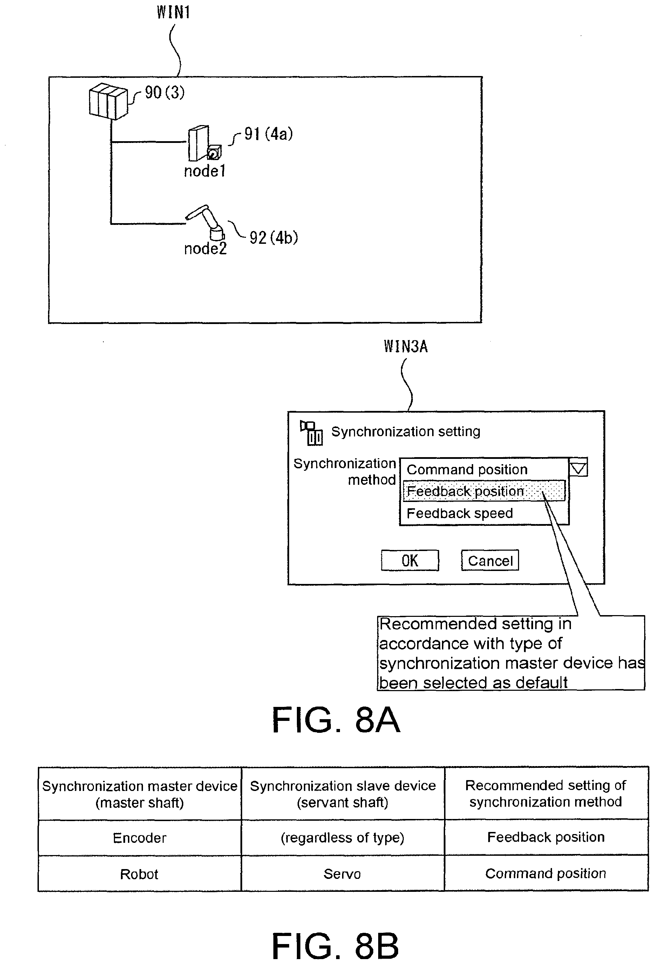

FIG. 8A is a diagram for explaining a fifth example of setting of the synchronization communication data. There is a case in which recommended setting (recommended setting of a synchronization method) can be considered for a synchronization method between the synchronization master device (master shaft) and the synchronization slave device (servant shaft). Thus, the synchronization method setting unit 16 selects setting of a synchronization method in accordance with the type of the first device that is the synchronization master device as initial setting of the synchronization method in the fifth example. Specifically, the synchronization method setting unit 16 selects (sets), as a default, the recommended setting of the synchronization method in accordance with the type of the synchronization master device.

In one example, it is considered that "feedback position" may be set as the recommended setting of the synchronization method regardless of the type of the synchronization slave device in a case in which the synchronization master device is an encoder. In FIG. 8A, the synchronization method setting unit 16 selects, as a default, "feedback position" as the recommended setting of the synchronization method in the case in which the first device is an encoder. Therefore, "feedback position" has already been selected as the synchronization method when the synchronization method setting unit 16 causes the window WIN3A to pop up.

In this manner, it is possible to offer the recommended setting in accordance with the type of the synchronization master device to the user by causing the synchronization method setting unit 16 to select the recommended setting of the synchronization method as a default. Therefore, it is not necessary for the user to select a preferable synchronization method every time in accordance with the type of the synchronization master device. Therefore, the convenience for the user is further improved.

FIG. 8B is a table illustrating an example of recommended setting of the synchronization method in accordance with the type of the synchronization master device. The synchronization method setting unit 16 may select the recommended setting of the synchronization method in accordance with the type of the synchronization master device with reference to the table stored in advance in the storage unit 80. The table may be set in advance by the manufacturer of the information processing device 1 or may be able to be reset by the user.

As described above, the recommended setting of the synchronization method may be decided only based on the type of the synchronization master device regardless of the type of the synchronization slave device. In a case in which the synchronization master device is an encoder, for example, "feedback position" may be selected as the recommended setting of the synchronization method regardless of the type of the synchronization slave device.

Alternatively, the recommended setting of the synchronization method may be decided by a combination of the type of the synchronization slave device and the type of the synchronization master device. In a case in which the synchronization master device is a robot and the synchronization slave device is a servo, for example, "command position" may be selected as the recommended setting of the synchronization method.

### [Reference embodiments]

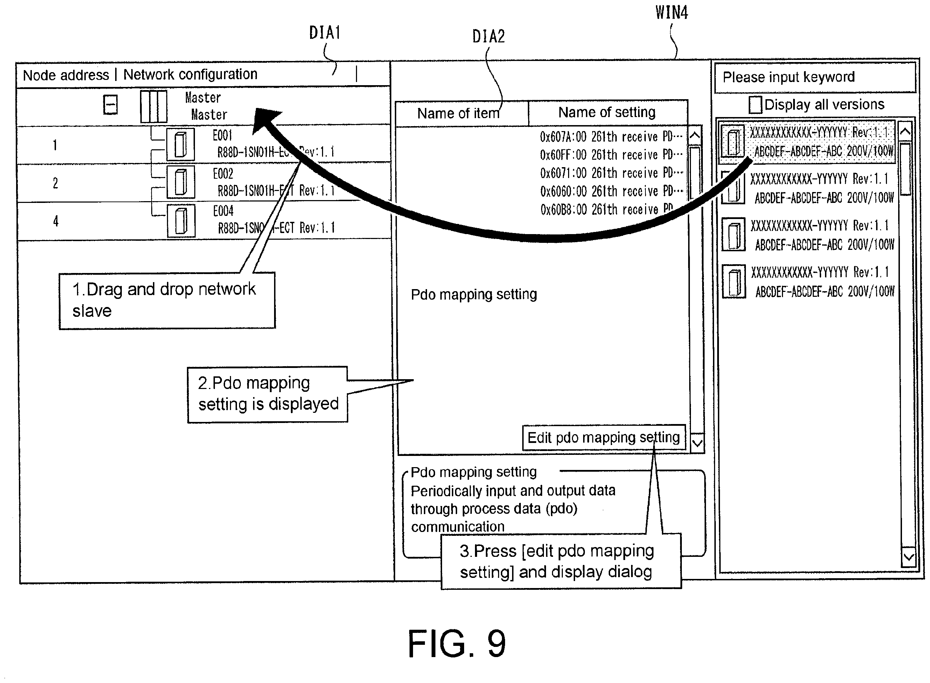

The data setting unit 14 can also set various kinds of communication data in response to user's operations. FIGS. 9 to 11 are respectively diagrams for explaining setting of communication data in response to user's operations.

As illustrated in FIG. 9, objects of a plurality of network slaves are displayed on the right side of a window WIN4 for setting the communication data. The user selects one object of a network slave and drags and drops the selected object to a dialog DIA1. The dialog DIA1 is a dialog for setting a network configuration of the FA system 100.

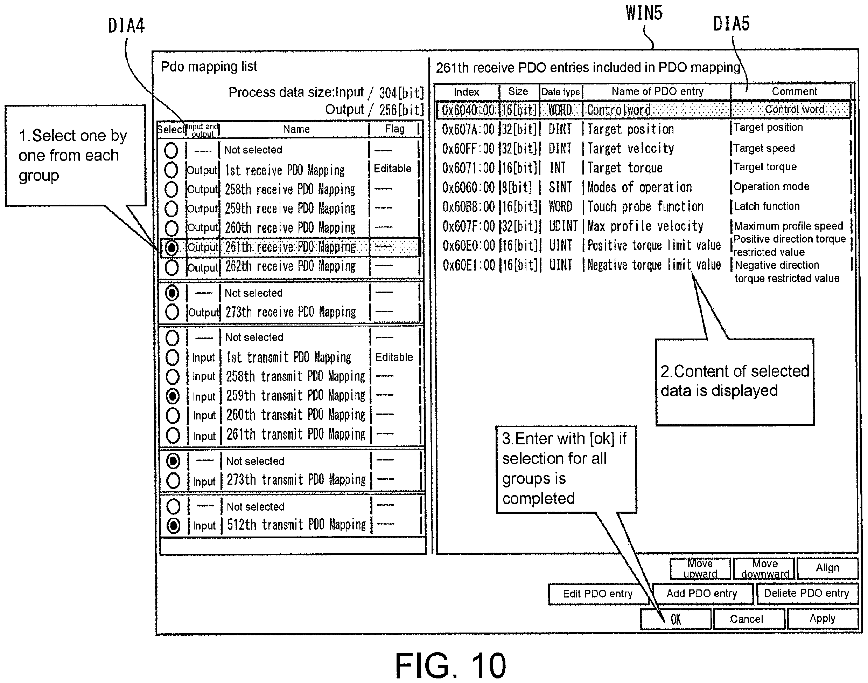

When the one object has been dragged and dropped to the dialog DIAl, a screen for setting process data object (PDO) mapping is displayed as a dialog DIA2. A window WIN5 (as illustrated in FIG. 10) for specifically setting the PDO mapping is popped up by the user clicking a button "edit PDO mapping setting" in the dialog DIA2.

FIG. 10 illustrates an example of the window WIN5. An input or output group is represented in DIA4 located on the left side of the window WIN5. Each group is sectioned by double lines for each type of data. The user selects one data item from each group by clicking a radio button.

When the user selects one data item, options of content (PDO entries) of the data are displayed in DIA5 located on the right side of the window WIN5. The user selects one item from the options displayed in DIA5. In this manner, it is possible to allow the user to set the content of one data item selected in DIA4 as needed.

The setting of the communication data is completed by the user setting the content of the one data item for each of all the groups in DIA 4. The window WIN4 is closed, and the setting selected by the user is reflected by the user clicking an "OK" button after the setting is completed.

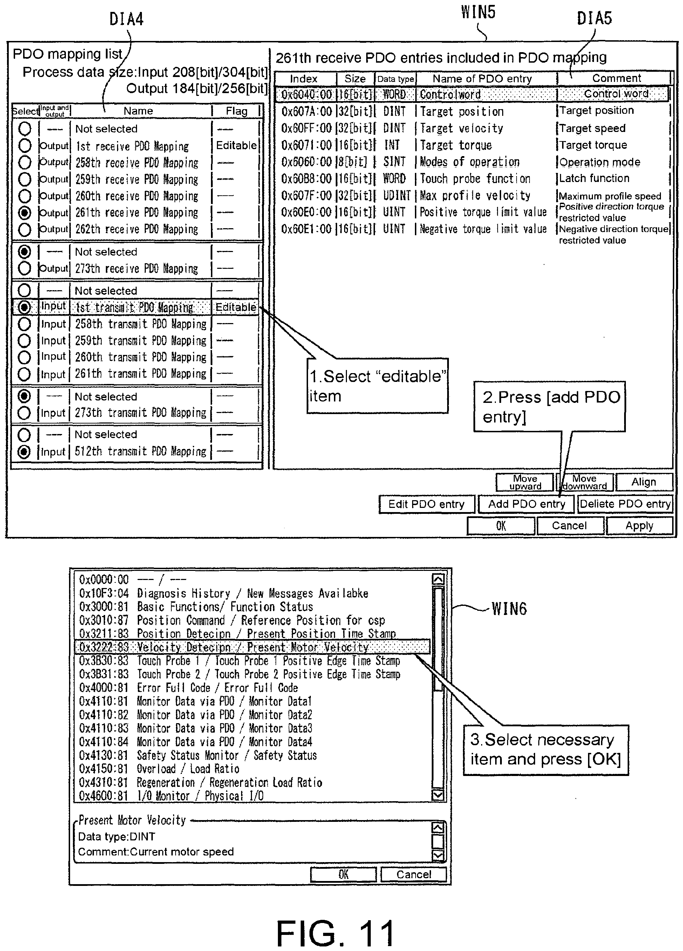

FIG. 11 illustrates another example of setting of content of data. In a case in which a flag indicating "editable" has been applied to data in DIA4, the user is permitted to edit the data. A window WIN6 is popped up by the user clicking an "add PDO entry" button after the data with the "editable" flag has been selected.

Options of content (PDO entries) of data that can be added are displayed in the window WIN6. The user selects one item corresponding to content of data that the user desires to add from among the options displayed in the window WIN6. In this manner, the user can individually set the output data and the input data for each of the network master and the network slave (the synchronization master device and the synchronization slave device).

### [Implementation examples by software]

Control blocks (particularly, the control unit 10) in the information processing device 1 may be implemented by logical circuits (hardware) formed on an integrated circuit (IC chip) or the like or may be implemented by software.

In the latter case, the information processing device 1 includes a computer that executes command of a program that is software for implementing the respective functions. The computer includes one or more processors and a computer readable recording medium that stores the program therein, for example. In addition, the object of an embodiment of the invention is achieved by the processor reading the program from the recording medium and executing the program in the computer. A central processing unit (CPU), for example, can be used as the processor. A "non-transitory tangible medium" such as a read only memory (ROM), a tape, a disc, a card, a semiconductor memory, a programmable logic circuit, or the like can be used as the recording medium. In addition, a random access memory (RAM) that develops the program and the like may be further provided. In addition, the program may be supplied to the computer via an arbitrary transmission medium (a communication network, a broadcasting wave, or the like) capable of transmitting the program.

### [Reference Signs List]

1: Information processing device (setting device)
3: Network master
4: Network slave
4a: Network slave (first device, inter-slave master, synchronization master device)
4b, 4c: Network slave (second device, inter-slave slave, synchronization slave device)
12: Application setting unit (purpose setting unit)
13: Network slave assignment setting unit (slave role setting unit)
14: Data setting unit
15: Synchronization relationship setting unit (slave role setting unit)
16: Synchronization method setting unit (synchronization target type setting unit)
82: Display unit (display screen)
90: Master object
91: First object
92, 93: Second object
100: FA system
ARW: Synchronization connection object (predetermined connection object)
TABLE: Setting table (a table for allowing a user to set a synchronization relationship)

## Claims

1. A factory automation, FA, system (100) being realized by a master-slave control system, the FA system comprising:
a setting device (1) that sets operation conditions for the FA system (100),
a network master (3), wherein the network master (3) is directly connected to the setting device (1); and
at least one network slave (4), wherein the at least one network slave (4) is directly connected to the network master (3) and is connected to the setting device (1) via the network master (3),
wherein the network slave (4) includes a first device (4a) and a second device (4b, 4c),
wherein the setting device (1) is comprising:
a slave role setting unit (13, 15) that sets a role of the at least one network slave (4) based on a user's operation,
wherein the role represents a master-servant relationship between the first device (4a) and the second device (4b, 4c) and the master-servant relationship in a case in which the first device (4a) and the second device (4b, 4c) mutually synchronously operate is regarded as a synchronization relationship;
a synchronization target type setting unit (16) that sets a synchronization target type that represents a type of numerical value that is a target of synchronization between the first device (4a) and the second device (4b, 4c) in the synchronization relationship,
wherein the type of numerical value comprises at least one of a command position, a feedback position, and a feedback speed of the first device; and
a data setting unit (14) that sets a type of data to be transmitted between the at least one network slave (4) and the network master (3) based on the role and sets a type of data to be transmitted from the first device (4a) to the second device (4b, 4c) via the network master (3) based on the synchronization relationship and the synchronization target type,
wherein the first device (4a) that is the inter-slave master in the synchronization relationship is regarded as a synchronization master device and the synchronization target type setting unit (16) selects setting of the synchronization target type in accordance with a type of the synchronization master device as initial setting of the synchronization target type.

2. The FA system of claim 1, wherein the setting device (1) further comprising: a purpose setting unit (12) that sets a purpose of the FA system (100),
wherein the role represents a role of the network slave (4) for the purpose, and the data setting unit sets the type of data to be transmitted between the at least one network slave (4) and the network master (3) further based on the purpose.

3. The FA system (100) according to claim 1, wherein the setting device (1) is further comprising:
a display screen (82),
wherein the slave role setting unit (13) causes the display screen (82) to display a table for allowing the user to perform an operation of setting the synchronization relationship.

4. The FA system (100) according to claim 1 , wherein the setting device (1) further comprising:
a display screen (82),
wherein, on the display screen (82),
an object that represents the first device (4a) is regarded as a first object, and
an object that represents the second device (4b, 4c) is regarded as a second object, and
wherein the slave role setting unit (13, 15) sets the synchronization relationship by being triggered by an event in which the user performs an operation of connecting the first object and the second object by a predetermined connection object on the display screen (82).

5. The FA system (100) according to any one of claims 1, 3 or 4,
wherein the slave role setting unit (13, 15) sets the synchronization relationship between the first device that is a single inter-slave master (4a) and second devices that are a plurality of inter-slave slaves (4b, 4c),
the first device that is the inter-slave master in the synchronization relationship is regarded as a synchronization master device,
the second devices that are inter-slave slaves in the synchronization relationship are regarded as synchronization slave devices, and
the synchronization target type setting unit sets the synchronization target type between the single synchronization master device and the plurality of synchronization slave devices.

6. A control program that causes a computer to function as the setting device according to claim 1, wherein the control program causes the computer to function as the slave role setting unit (13, 15), the data setting unit (14), and the synchronization target type setting unit (16).

7. A control method of a setting device that sets operation conditions for an FA system (100) according to claim 1 based on a user's operation.

## Patentansprüche

1. Fabrikautomatisierungssystem, FA-System, (100), das durch ein Master-Slave-Steuersystem realisiert wird, wobei das FA-System Folgendes umfasst:
eine Einstellvorrichtung (1), die Betriebsbedingungen für das FA-System (100) einstellt,
einen Netz-Master (3), wobei der Netz-Master (3) mit der Einstellvorrichtung (1) direkt verbunden ist; und
mindestens einen Netz-Slave (4), wobei der mindestens eine Netz-Slave (4) mit dem Netz-Master (3) direkt verbunden ist und mit der Einstellvorrichtung (1) über den Netz-Master (3) verbunden ist,
wobei der Netz-Slave (4) eine erste Vorrichtung (4a) und eine zweite Vorrichtung (4b, 4c) enthält,
wobei die Einstellvorrichtung (1) Folgendes umfasst:
eine Slave-Rollen-Einstelleinheit (13, 15), die eine Rolle des mindestens einen Netz-Slaves (4) basierend auf einer Bedienung durch einen Anwender einstellt,
wobei die Rolle eine Master-Slave-Beziehung zwischen der ersten Vorrichtung (4a) und der zweiten Vorrichtung (4b, 4c) darstellt und die Master-Slave-Beziehung in einem Fall, in dem die erste Vorrichtung (4a) und die zweite Vorrichtung (4b, 4c) wechselseitig synchron arbeiten, als eine Synchronisationsbeziehung betrachtet wird;
eine Synchronisationszieltyp-Einstelleinheit (16), die einen Synchronisationszieltyp einstellt, der einen Typ eines numerischen Werts, d. h. ein Ziel der Synchronisation zwischen der ersten Vorrichtung (4a) und der zweiten Vorrichtung (4b, 4c) in der Synchronisationsbeziehung, darstellt,
wobei der Typ des numerischen Werts eine Befehlsposition, eine Rückkopplungsposition und/oder eine Rückkopplungsgeschwindigkeit der ersten Vorrichtung umfasst; und
eine Dateneinstelleinheit (14), die einen Typ von Daten, die zwischen dem mindestens einen Netz-Slave (4) und dem Netz-Master (3) übertragen werden sollen, basierend auf der Rolle einstellt, und einen Typ von Daten, die von der ersten Vorrichtung (4a) zu der zweiten Vorrichtung (4b, 4c) über den Netz-Master (3) übertragen werden sollen, basierend auf der Synchronisationsbeziehung und dem Synchronisationszieltyp einstellt,
wobei die erste Vorrichtung (4a), d. h. der Inter-Slave-Master in der Synchronisationsbeziehung als eine Synchronisations-Master-Vorrichtung betrachtet wird und die Synchronisationszieltyp-Einstelleinheit (16) das Einstellen des Synchronisationszieltyps in Übereinstimmung mit einem Typ der Synchronisations-Master-Vorrichtung als Anfangseinstellung des Synchronisationszieltyps auswählt.

2. FA-System nach Anspruch 1, wobei die Einstellvorrichtung (1) ferner Folgendes umfasst:
eine Zweckeinstelleinheit (12), die einen Zweck des FA-Systems (100) einstellt,
wobei die Rolle eine Rolle des Netz-Slaves (4) für den Zweck darstellt, und die Dateneinstelleinheit den Typ von Daten, die zwischen dem mindestens einen Netz-Slave (4) und dem Netz-Master (3) übertragen werden sollen, ferner basierend auf dem Zweck einstellt.

3. FA-System (100) nach Anspruch 1, wobei die Einstellvorrichtung (1) ferner Folgendes umfasst:
einen Anzeigebildschirm (82),
wobei die Slave-Rollen-Einstelleinheit (13) den Anzeigebildschirm (82) veranlasst, eine Tabelle anzuzeigen, um dem Anwender zu erlauben, einen Vorgang des Einstellens der Synchronisationsbeziehung durchzuführen.

4. FA-System (100) nach Anspruch 1, wobei die Einstellvorrichtung (1) ferner Folgendes umfasst:
einen Anzeigebildschirm (82),
wobei auf dem Anzeigebildschirm (82)
ein Objekt, das die erste Vorrichtung (4a) darstellt, als ein erstes Objekt betrachtet wird und
ein Objekt, das die zweite Vorrichtung (4b, 4c) darstellt, als ein zweites Objekt betrachtet wird und
wobei die Slave-Rollen-Einstelleinheit (13, 15) die Synchronisationsbeziehung einstellt, indem sie durch ein Ereignis ausgelöst wird, in dem der Anwender einen Vorgang des Verbindens des ersten Objekts und des zweiten Objekts durch ein vorbestimmtes Verbindungsobjekt auf dem Anzeigebildschirm (82) durchführt.

5. FA-System (100) nach einem der Ansprüche 1, 3 oder 4,
wobei die Slave-Rollen-Einstelleinheit (13, 15) die Synchronisationsbeziehung zwischen der ersten Vorrichtung, die ein einzelner Inter-Slave-Master (4a) ist, und den zweiten Vorrichtungen, die mehrere Inter-Slave-Slaves (4b, 4c) sind, einstellt,
die erste Vorrichtung, d. h. der Inter-Slave-Master in der Synchronisationsbeziehung, als eine Synchronisations-Master-Vorrichtung betrachtet wird,
die zweite Vorrichtungen, d. h. die Inter-Slave-Slaves in der Synchronisationsbeziehung, als Synchronisations-Slave-Vorrichtungen betrachtet werden, und
die Synchronisationszieltyp-Einstelleinheit den Synchronisationszieltyp zwischen der einzelnen Synchronisations-Master-Vorrichtung und den mehreren Synchronisations-Slave-Vorrichtungen einstellt.

6. Steuerprogramm, das einen Computer veranlasst, als die Einstellvorrichtung nach Anspruch 1 zu funktionieren, wobei das Steuerprogramm den Computer veranlasst, als die Slave-Rollen-Einstelleinheit (13, 15), die Dateneinstelleinheit (14) und die Synchronisationszieltyp-Einstelleinheit (16) zu funktionieren.

7. Steuerverfahren einer Einstellvorrichtung, die Betriebsbedingungen für ein FA-System (100) nach Anspruch 1 basierend auf einer Bedienung durch den Anwender einstellt.

## Revendications

1. Système d'automatisation industrielle, FA (100) étant réalisé par un système de commande maître-esclave, le système FA comportant :
un dispositif de paramétrage (1) qui paramètre des conditions opératoires du système FA (100),
un maître de réseau (3), dans lequel le maître de réseau (3) est directement connecté au dispositif de paramétrage (1) ; et
au moins un esclave de réseau (4), dans lequel le au moins un esclave de réseau (4) est directement connecté au maître de réseau (3) et est connecté au dispositif de paramétrage (1) via le maître de réseau (3),
dans lequel l'esclave de réseau (4) inclut un premier dispositif (4a) et un second dispositif (4b, 4c),
dans lequel le dispositif de paramétrage (1) comporte :
une unité de paramétrage de rôle d'esclave (13, 15) qui paramètre un rôle du au moins un esclave de réseau (4) sur la base d'une opération d'utilisateur,
dans lequel le rôle représente une relation maître-serviteur entre le premier dispositif (4a) et le second dispositif (4b, 4c) et la relation maître-serviteur dans un cas où le premier dispositif (4a) et le second dispositif (4b, 4c) fonctionnent de manière mutuellement synchronisée est considérée comme une relation de synchronisation ;
une unité de paramétrage de type de cible de synchronisation (16) qui paramètre un type de cible de synchronisation qui représente un type de valeur numérique qui est une cible de synchronisation entre le premier dispositif (4a) et le second dispositif (4b, 4c) dans la relation de synchronisation,
dans lequel le type de valeur numérique comporte au moins un élément parmi une position de commande, une position asservie et une vitesse asservie du premier dispositif ; et
une unité de paramétrage de données (14) qui paramètre un type de données à transmettre entre le au moins un esclave de réseau (4) et le maître de réseau (3) sur la base du rôle et paramètre un type de données à transmettre du premier dispositif (4a) au second dispositif (4b, 4c) via le maître de réseau (3) sur la base de la relation de synchronisation et du type de cible de synchronisation,
dans lequel le premier dispositif (4a) qui est le maître inter-esclave dans la relation de synchronisation est considéré comme un dispositif maître de synchronisation et l'unité de paramétrage de type de cible de synchronisation (16) sélectionne un paramétrage du type de cible de synchronisation en fonction d'un type du dispositif maître de synchronisation comme un paramétrage initial du type de cible de synchronisation.

2. Système FA selon la revendication 1, dans lequel le dispositif de paramétrage (1) comporte en outre :
une unité de paramétrage de finalité (12) qui définit une finalité du système FA (100),
dans lequel le rôle représente un rôle de l'esclave de réseau (4) pour la finalité, et l'unité de paramétrage de données paramètre le type de données à transmettre entre le au moins un esclave de réseau (4) et le maître de réseau (4) également sur la base de la finalité.

3. Système FA (100) selon la revendication 1, dans lequel le dispositif de paramétrage (1) comporte en outre :
un écran d'affichage (82),
dans lequel l'unité de paramétrage de rôle d'esclave (13) amène l'écran d'affichage (82) à afficher un tableau pour permettre à l'utilisateur d'exécuter une opération de paramétrage de la relation de synchronisation.

4. Système FA (100) selon la revendication 1, dans lequel le dispositif de paramétrage (1) comporte en outre :
un écran d'affichage (82),
dans lequel, sur l'écran d'affichage (82),
un objet qui représente le premier dispositif (4a) est considéré comme un premier objet, et
un objet qui représente le second dispositif (4b, 4c) est considéré comme un second objet, et
dans lequel l'unité de paramétrage de rôle d'esclave (13, 15) paramètre la relation de synchronisation en étant déclenchée par un événement pendant lequel l'utilisateur exécute une opération de connexion du premier objet et du second objet par un objet de connexion prédéterminé sur l'écran d'affichage (82).

5. Système FA (100) selon l'une quelconque des revendications 1, 3 ou 4,
dans lequel l'unité de paramétrage de rôle d'esclave (13, 15) paramètre la relation de synchronisation entre le premier dispositif qui est un maître inter-esclave unique (4a) et des seconds dispositifs qui sont une pluralité d'esclaves inter-esclaves (4b, 4c),
le premier dispositif qui est le maître inter-esclave dans la relation de synchronisation est considéré comme un dispositif maître de synchronisation,
les seconds dispositifs qui sont des esclaves inter-esclaves dans la relation de synchronisation sont considérés comme des dispositifs esclaves de synchronisation, et
l'unité de paramétrage de type de cible de synchronisation paramètre le type de cible de synchronisation entre le dispositif maître de synchronisation unique et la pluralité de dispositifs esclaves de synchronisation.

6. Programme de commande qui amène un ordinateur à fonctionner comme le dispositif de paramétrage selon la revendication 1, dans lequel le programme de commande amène l'ordinateur à fonctionner comme l'unité de paramétrage de rôle d'esclave (13, 15), l'unité de paramétrage de données (14) et l'unité de paramétrage de type de cible de synchronisation (16).

7. Procédé de commande d'un dispositif de paramétrage qui paramètre des conditions opératoires pour un système FA (100) selon la revendication 1 sur la base d'une opération d'utilisateur.
